# EUROPÄISCHE PATENTSCHRIFT

(11) **EP 2 017 433 B1**
(45) Veröffentlichungstag und Bekanntmachung des Hinweises auf die Patenterteilung: **21.11.2018**
(21) Anmeldenummer: 08010396.3
(22) Anmeldetag: 06.06.2008
(51) Int. Cl.: F01D 5/14, F01D 5/28

(54) **Gasturbinenschaufel mit modularem Aufbau**
Gas turbine blade with modular structure
Aube de turbine à gaz en forme modulaire

(30) Priorität: 14.06.2007 DE 102007027465
(43) Veröffentlichungstag der Anmeldung: 21.01.2009
(73) Patentinhaber: Rolls-Royce Deutschland Ltd & Co KG, 15827 Blankenfelde-Mahlow (DE)
(72) Erfinder: Gerakis, Jeffrey-George, 12309 Berlin (DE); Davison, Peter, 15838 Wünsdorf (DE)
(74) Vertreter: Hoefer & Partner Patentanwälte mbB

(56) Entgegenhaltungen:
- EP-A1- 0 118 020
- FR-A1- 2 463 849
- FR-E- 51 723
- GB-A- 625 693
- GB-A- 2 084 262
- US-A- 3 567 333
- US-A- 3 950 113
- US-A- 4 285 634
- US-A- 4 519 745
- US-B2- 6 821 087

## Beschreibung

Die Erfindung bezieht sich auf eine Gasturbinenschaufel gemäß dem Oberbegriff des Anspruchs 1.

Im Einzelnen bezieht sich die Erfindung auf eine Gasturbinenschaufel mit einem Schaufelblatt, welches radial außenliegend mit einem Deckband versehen ist und radial innenliegend an einer Plattform befestigt ist. Die Plattform wiederum ist über einen Schaft (innen liegender Lastträger) 6 mit einem Fuß versehen und an einer Scheibe verankert, so wie dies aus dem Stand der Technik bekannt ist.

Zum Stand der Technik wird auf die beiden US 2006/0120869 A1 und die US 7,080,971 B2 verwiesen.

Die meisten Gasturbinen-Rotorschaufeln werden heutzutage aus Schmiedeteilen oder Feinguss hergestellt.

Kompressorschaufeln werden typischerweise aus Schmiedeteilen hergestellt und haben dünne, radial gestapelte Querschnitte.

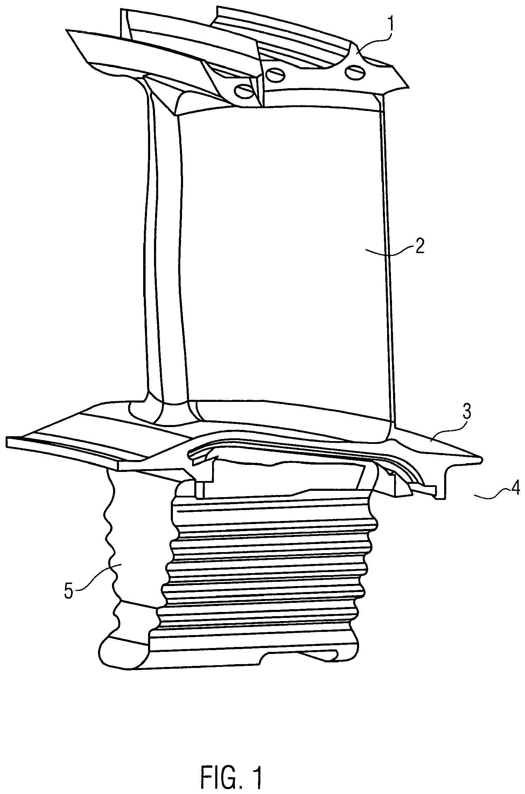

Turbinenschaufeln werden typischerweise aus komplizierten Feingüssen (Fig. 1) unter Verwendung eines Wachsaufschmelz-Gussverfahrens hergestellt. Dies ist sehr zeitaufwendig und kostenintensiv.

Um eine Kriechdehnung und die schädlichen Wirkungen der Umgebung aus heißem Gas zu bewältigen, haben Turbinenschaufeln radial gestapelte und dickere Querschnitte als Kompressorschaufeln. Sie beinhalten Kühlluft-Ausstoßlöcher (Kühlung der Oberflächenschicht und des Austrittskanten-Ausstoßes), welche zusätzliche intern gegossene Kühlluft-Zuführdurchgänge erfordern. Der Druckunterschied ist immer positiv, so dass Kühlluft immer nach außen in den Gaspfad austritt.

Turbinenschaufeln werden typischerweise als gleichachsige, ausgerichtet verfestigte oder Einzelkristall-Gussteile gefertigt. Diese Gussteile werden anschließend durch maschinelle Bearbeitung und Polieren der Tragflächenoberflächen endbearbeitet, um einen hohen Grad an Oberflächenbehandlung zu erhalten. Um eine Sulfidierung und Oxidation zu vermeiden, werden die Schaufeln schließlich mit einer dünnen und teuren aluminisierten Beschichtung überzogen.

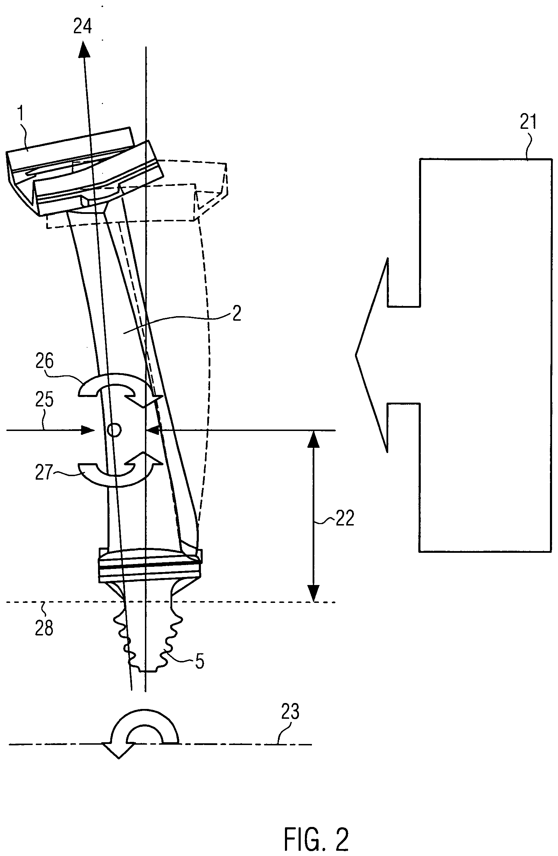

Da Turbinenschaufeln sehr hohen mechanischen Geschwindigkeiten unterworfen sind (und deshalb großen CF-Kräften/Zentrifugalkräften) (Fig. 2) sowie einem heißen chemisch aggressiven Umfeld ausgesetzt sind, leiden die Schaufeln unter einem gewissen Grad an Kriechdehnung und Verschlechterung.

Das Wachsausschmelz-Gussverfahren ist ein manuelles, zeitaufwendiges und arbeitsintensives Herstellungsverfahren, das manchmal zu Mangelhaftigkeit führt, wie Schrumpf, insbesondere wenn interne Kühldurchgänge betroffen sind.

Zusätzlich machen Einschränkungen bei der Herstellung manchmal ein optimiertes Design der internen Kühldurchgänge unmöglich.

Um die sehr großen Zentrifugalkräfte (CF-Zug), welche die Schaufeln aufgrund der Hochgeschwindigkeitsdrehung erfahren, zu stützen, müssen die Seitenwand-Tragflächen der Schaufeln ziemlich dick im Querschnitt sein, wodurch das Gewicht erhöht wird und der CF-Zug auf die Tannenbaumfüße der Schaufeln aufgrund des erhöhten Gewichts der Schaufel erhöht wird.

Die Nachteile dieses herkömmlichen Konstruktionsverfahrens sind wie folgt:
- Notwendigkeit der Herstellung eines einzelnen Gussteils mit dem einzigen Material, das die beste Lösung im Hinblick auf Kriechdehnung bietet, aber einen Kompromiss darstellt im Hinblick auf andere Leistungsanforderungen an die Schaufel.

- Die tragflächenförmige Oberfläche dient sowohl als Zentrifugalkraft-Belastungsträger als auch als aerodynamischer Lastträger. Diese widersprüchlichen Anforderungen können die aerodynamische Optimierung der Seitenwandflächen gefährden.
- Die Einstück-Konstruktion führt zu Problemen und Einschränkungen im Hinblick auf Schaufelreparaturen. Häufige Problembereiche in Turbinenschaufeln sind ein Ausbrennen der dünnen Austrittskanten um die Mittelspanne, wobei das gleiche Problem auch an der Eintrittskante auftritt, wenn auch seltener, und Sulfidierungskorrosion der aerodynamischen Oberflächen.

Die US 4 519 745 A zeigt einen Aufbau mit einem Lastträger, welcher von einem Kühlluft-Hohlraum umgeben wird. Die GB 2 084 262 A zeigt eine hierzu sehr ähnliche Konstruktion. Die US 3 567 333 A zeigt eine ähnliche Konstruktion mit einem Träger, welcher einzelne Kühlluft-Kanäle definiert. Auch die FR 51 723 E zeigt eine ähnliche Konstruktion mit einem Lastträger sowie einem diesen umgebenden Schaufelelement. Aus der US 4 285 634 A ist es bekannt, einzelne Stäbe vorzusehen, um eine Außen-Plattform mit einem Fuß zu verbinden. Die US 3 950 113 A zeigt eine Konstruktion, bei welcher ein zentrischer Träger einstückig mit dem Fuß verbunden ist. Weitere Lösungen sind aus der FR 2 463 849 A1 vorbekannt. Auch die GB 625 693 A zeigt eine Konstruktion mit einem zentrischen Träger sowie diesen umgebenden Luftkanälen und einem Schaufelelement.

Ferner ist aus der US 6,821,087 B2 ein beschichteter Lastträger aus Kohlenstofffasern bekannt.

Der Erfindung liegt die Aufgabe zugrunde, eine Gasturbinenschaufel der eingangs genannten Art zu schaffen, welche bei einfachem Aufbau und einfacher, kostengünstiger Herstellbarkeit die Nachteile des Standes der Technik vermeidet.

Erfindungsgemäß wird die Aufgabe durch die Merkmalskombination des Anspruchs 1 gelöst, die Unteransprüche zeigen weitere vorteilhafte Ausgestaltungen der Erfindung.

Die Erfindung betrifft somit ein neuartiges Design und ein neues Herstellungsverfahren für Turbinenschaufeln.

Erfindungsgemäß ist vorgesehen, dass Turbinenschaufeln aus getrennten modularen Teilen konstruiert und hergestellt werden, die dann nachfolgend zusammengefügt werden, um eine vollständige Turbinenschaufelanordnung zu bilden.

Dieses modulare Konstruktionsprinzip kann für Schaufeln für Gebläse und Kompressoren verwendet werden. Der größte Vorteil im Hinblick auf Kosten, Leistung und Herstellung wird derzeit bei der Turbinenschaufelkonstruktion erzielt.

Der Vorteil ist, das jedes modulare Teil optimiert wird, um seine Aufgabe und Funktion zu erfüllen, indem das optimale Material für diesen Zweck gewählt wird. Dies bietet Vorteile gegenüber einem monolithischen Schaufelaufbau, bei dem die Auswahl eines einzigen Materials verschiedene Belastungen aushalten muss, ein Spektrum an widersprüchlichen Funktionen abdecken muss und verschiedenen potenziellen Ausfallmechanismen ausgesetzt ist.

Die Zentrifugalkraft-Zuglast aufgrund der Drehgeschwindigkeit wird von einem radial angeordneten, zentralen und/oder zwischen dem inneren und äußeren Plattformmodul angeordneten Schaftmodul getragen. Dieses zentrale Schaftmodul liegt im Inneren des tragflächenförmigen Büchsenmoduls und wird außen durch Kühlluft gekühlt, die in den Schaufelhohlraum um den zentralen Schaft (innen liegender Lastträger) 6 strömt.

Die aerodynamischen Lasten werden von einem intern gekühlten, tragflächenförmigen Büchsenmodul getragen. Die Büchse unterliegt aerodynamischen Belastungen wie auch einer komprimierenden Zentrifugalkraftlast aufgrund des eigenen Gewichts und dem gleitenden Innenendaufbau. Jedoch betragen diese komprimierenden Lasten typischerweise nur 10% der Zentrifugalkraft-Zuglasten. Die Ausdehnung der Büchse aufgrund der Temperatur gleicht die Kontraktion aufgrund der Zentrifugalkraft-Zuglasten aus.

Im Folgenden wird die Erfindung anhand von Ausführungsbeispielen in Verbindung mit der Zeichnung beschrieben. Dabei zeigt:
- Fig. 1: eine perspektivische, schematische Darstellung einer Gasturbinenschaufel nach dem Stand der Technik,
- Fig. 2: eine Darstellung der auftretenden Belastungen einer Gasturbinenschaufel,
- Fig. 3A: ein erstes Ausführungsbeispiel einer erfindungsgemäßen Gasturbinenschaufel in Explosionsansicht mit Zuordnung der Herstellungsschritte,
- Fig. 3B: ein zweites Ausführungsbeispiel, analog Fig. 3A,
- Fig. 3C: ein weiteres Ausführungsbeispiel einer erfindungsgemäßen Gasturbinenschaufel, analog den Fign. 3A und 3B,
- Fig. 3D: ein weiteres Ausführungsbeispiel einer erfindungsgemäßen Gasturbinenschaufel, und
- Fig. 4: eine Schnittansicht eines fertig montierten Ausführungsbeispiels einer erfindungsgemäßen Gasturbinenschaufel.

In den nachfolgenden Ausführungsbeispielen werden gleiche Teile mit gleichen Bezugsziffern versehen.

Die Fig. 1 zeigt eine perspektivische Ansicht einer Gasturbinenschaufel gemäß Stand der Technik. Diese umfasst ein Deckband 1, ein Schaufelblatt 2, eine Plattform 3, einen Schaft 4 sowie einen Fuß 5, der als Tannenbaumfuß ausgebildet ist.

Die Fig. 2 zeigt auftretende Belastungen einer Gasturbinenschaufel gemäß dem Stand der Technik. Durch eine Gasbelastung 21 (großer Pfeil) ergibt sich ein Momentenarm 22 für die Gasbelastung. Bei einer Drehung um eine Maschinenachse 23 ergibt sich eine Zentrifugalkraft 24, welche einem Zentrifugalkraft-Momentenarm 25 zugeordnet ist. Das Bezugszeichen 26 bezeichnet ein Zentrifugalkraft-Kräftepaar, ein Gaskraft-Kräftepaar ist mit 27 bezeichnet. Das Bezugszeichen 28 zeigt einen auszugleichenden Einspannbereich des Schaufelfußes 5.

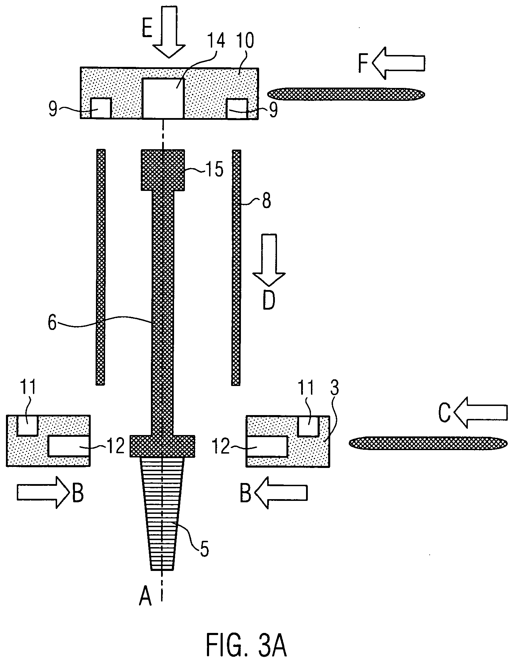

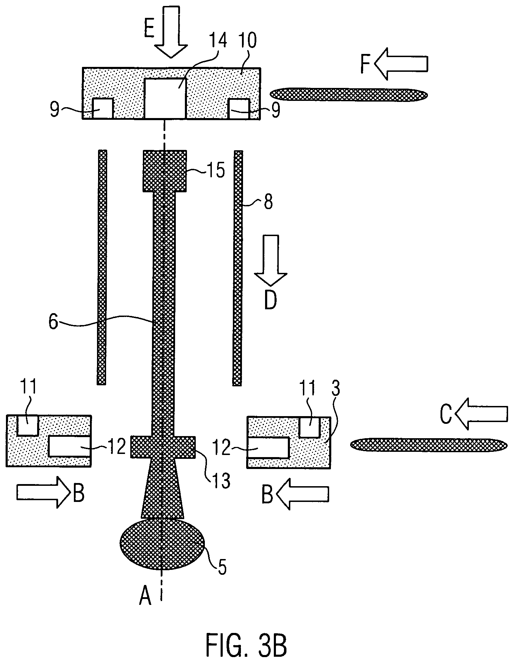

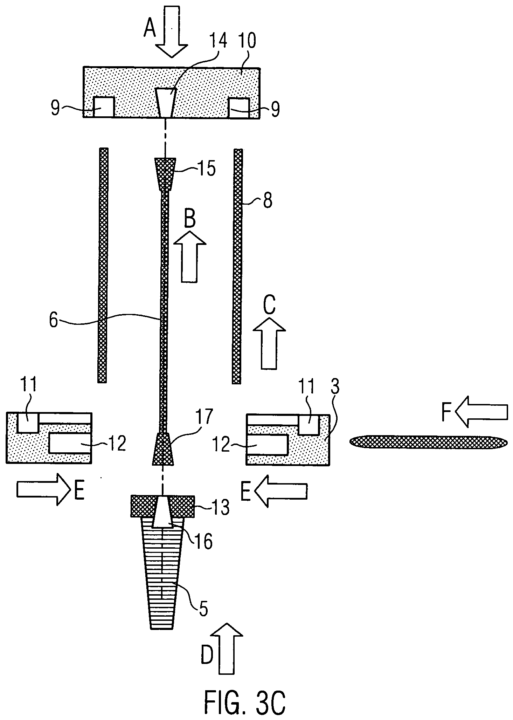

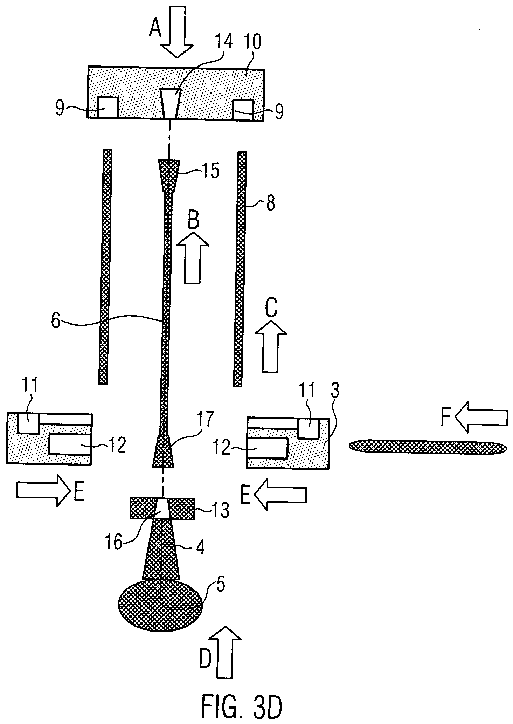

Vier unterschiedliche Ausgestaltungsformen der erfindungsgemäßen Gasturbinenschaufel sind in den Fign. 3A, 3B, 3C und 3D gezeigt.

Die erfindungsgemäße Konstruktion in Fig. 3A weist folgende Komponenten auf:
- Es ist ein radial angeordneter, zentraler Schaft (innen liegender Lastträger) 6 mit integralem Tannenbaumfuß 5 vorgesehen. Der zentrale Schaft (innen liegender Lastträger) 6 trägt die CF-Zugkraft von der Tannenbaum-Befestigung an der Außenspitze des Schaufelblatts 2.
- Der Schaft (innen liegender Lastträger) 6 wird aus einer verdrehten Strangfaser aus Carbon-Nanotube (CNT) hergestellt. Verdrehte CNT-Strangfasern haben eine viel höhere Belastungsfähigkeit als hochfeste Stahlfasern mit gleichem Durchmesser und können auch sehr heiße Umgebungen aushalten (wenn sie nicht mit einer Bindematrix imprägniert sind). Der flexible CNT-Faserschaft (innen liegender Lastträger) 6 wird in die obere Plattform und über konische keramische Endbefestigungen in den Tannenbaumfuß eingesteckt. Diese verhindern gleichzeitig eine Trennung der Fasern.
- Weiterhin ist ein einstückiges, tragflächenförmiges Blattelement 8 (Büchse) vorgesehen, welches die herkömmliche Tragfläche des Schaufelblatts 2 ersetzt und die aerodynamische Oberfläche für Gaslasten bietet. Die Kompressionslasten auf das Blattelement 8 (Büchse) selbst entstehen nur aufgrund der mechanischen CF-Lasten ihres eigenen Aufbaus.

- Die Außenplattform 10 ist ein einzelnes Teil und wird mit dem radialen Schaft (innen liegender Lastträger) 6 radial innen verbunden. Das aerodynamische Blattelement 8 wird in die Außenplattform 10 (Lagerblock) in einer tragflächenförmigen Nut 9, ähnlich zu der Nut 11 in der Innen-Plattform 3, eingesteckt. Der CNT-Schaft (innen liegender Lastträger) 6 wird in die obere Außen-Plattform 10 eingesteckt.
- Eine Innen-Plattform 3 mit einer dünnen Nut 11 mit großer Flügelstreckung, in welche die Tragflächenbüchse (Blattelement 8) eingesetzt wird. Das untere Ende der Tragflächenbüchse (Blattelement 8) wird in diese Nut 11 eingesetzt, die Stoßdämpfer-Vorsprünge aufweist, um die Tragflächenbüchse (Blattelement 8) seitlich zu begrenzen und um eine Schwingung an ihrem unteren Ende (das im Wesentlichen ein freies Ende ist) zu verhindern. Die Stoßdämpfer-Vorsprünge erlauben jedoch eine Gleitbewegung in radialer Richtung. Für eine einfachere Herstellung und Montage ist die Innen-Plattform 3 als ein geteiltes Element ausgebildet, das sich in einen rechten und einen linken Teil unterteilt. Die Innen-Plattform wird zusammengeschraubt und ist mit dem zentralen Schaft (innen liegender Lastträger) 6 sicher verbunden, um eine vollständige Schaufelanordnung herzustellen.
- Ein kleines Ausmaß an radialem Spiel in dem Blattelement 8 ist wegen Wärmeausdehnung erlaubt. Das Blattelement 8 und die Plattformnuten 9, 11 biegen die ursprüngliche Schaufelstabilität, wenn die Turbine feststehend ist (nicht dreht).
- Sobald die Turbine beginnt sich zu drehen, wird die CF-Zuglast von dem CNT-Schaft (innen liegender Lastträger) 6 aufgenommen.

Die Konstruktion gemäß Fig. 3D besteht aus Folgendem:
- Diese Konstruktion ist die gleiche wie oben beschrieben, außer dass der Tannenbaumfuß 5 nun durch einen Schwalbenschwanzfuß ersetzt wird. Der zentrale Schaft (innen liegender Lastträger) 6 trägt die CF-Zuglast von der Schwalbenschwanzfuß-Befestigung zur äußeren Spitze der Schaufel.
- Die Schwalbenschwanzfuß-Konstruktion ist einfacher herzustellen als die Tannenbaumfuß-Konstruktion und kann die beste Lösung bilden, da die erfindungsgemäßen modularen Turbinenschaufeln leichter sind als die derzeit üblichen Konstruktionen. Ein schwereres Teil erfährt einen stärkeren CF-Zug und erfordert eine Tannenbaumfuß-Befestigung, um die Belastung gleichmäßig zu verteilen.

Die Fign. 3A bis 3D zeigen jeweils mit A bis F versehene Pfeile, die die Herstell-Schritte verdeutlichen:
Gemäß Fig. 3A ist vorgesehen, dass in den Schritten A und B die Hälften der Innenplattform 3 zusammengefügt werden, so dass Nuten 12 einen Sockel 13 des Fußes 5 greifen. Im Schritt C erfolgt eine Verriegelung, im Schritt D wird das aerodynamische Blattelement 8 in die Nuten 11 der Innenplattform 3 eingesteckt. Im Schritt E wird die Außenplattform 10 aufgesteckt, so dass das Blattelement 8 in die Nut 9 eingeführt wird und ein radial außen liegender Sockel 15 des innen liegenden Lastträgers 6 in eine Ausnehmung 14 der Außenplattform 10 eingeführt wird. Anschließend erfolgt im Schritt F eine Versiegelung.

Das Montageverfahren gemäß Fig. 3B erfolgt in gleicher Weise.

Bei dem Montageverfahren gemäß Fign. 3C und 3D ist zusätzlich in dem Sockel 13 eine Ausnehmung 16 vorgesehen, in welche der Sockel 17 des innen liegenden Lastträgers 6 eingefügt wird. Alle weiteren Herstellungsschritte erfolgen analog.

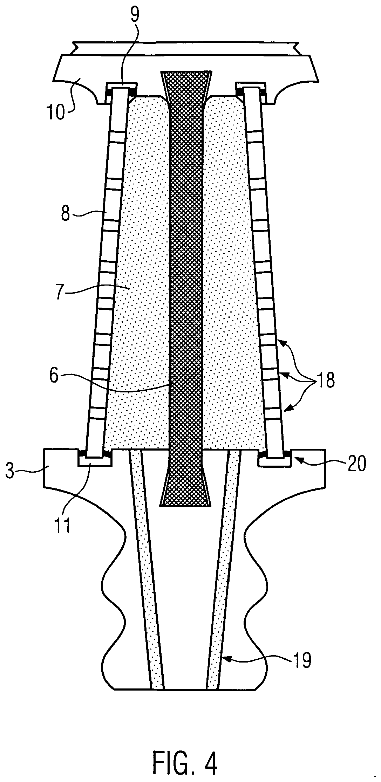

Die Fig. 4 zeigt eine Zusammenstellungszeichnung eines Ausführungsbeispiels einer erfindungsgemäße Gasturbinenschaufel.

Vorteile der erfindungsgemäßen Konstruktion:
- Das modulare Design ermöglicht, die Materialeigenschaften und die Herstellung auf genaue Lageanforderungen abzustimmen.
- Der zentrale Schaft (innen liegender Lastträger) 6 (Fig. 3A und 3B) kann aus einem Stangen-Schmiedeteil oder ähnlichem Material mit optimierter Zugfestigkeit hergestellt werden.
- Alternativ kann der zentrale Schaft (innen liegender Lastträger) 6 in zwei Teilen hergestellt werden: ein Teil Tannenbaumfuß oder Schwalbenschwanzfuß aus einer geschmiedeten Legierung plus ein Teil aus einem fortschrittlichen Material, wie verdrehte Strangfaser aus Carbon-Nanotube (CNT). Der zentrale Schaft (innen liegender Lastträger) 6, der die Plattformen 3, 10 und die tragflächenförmige Büchse (Blattelement 8) trägt, wird viel leichter und verringert die gesamte CF-Belastung auf den Schaufelfuß 5. Verdrehte Strangfasern aus CNT haben eine viel höhere Belastungsfähigkeit als hochfeste Stahlfasern mit gleichem Durchmesser und können sehr heiße Umgebungen aushalten (wenn sie nicht mit einer Bindematrix imprägniert sind).
- Die erfindungsgemäßen Konstruktionen können leichter sei, wodurch die Notwendigkeit für eine schwerere und teurere Tannenbaumfuß-Konstruktion wegfällt. Eine Schwalbenschwanz-Konstruktion kann ausreichend sein.
- Da die tragflächenförmige Büchse (Blattelement 8) nicht aus einem Einzelkristall-Gussteil gefertigt sein muss, kann das passende Material (z.B. eine Nimonic-Legierung, ein keramisches Metall usw.) verwendet werden, um die besten Eigenschaften und eine Widerstandsfähigkeit gegen Sulfidierung zu erhalten.
- Die neuen tragflächenförmigen Büchsen (Blattelement 8) können schneller und billiger getestet werden als herkömmliche Schaufeln, indem einfach die tragflächenförmige Büchse (Blattelement 8) ausgetauscht wird.
- Da die neuen Konstruktionen leichter sind, kann der Versetzwinkel der Schaufelfüße nahezu parallel zur Motorachse sein, wodurch eine Belastung der Fußecken beseitigt wird. Somit sind dünnere, leichtere Scheiben möglich.
- Die Anforderungen an die Kühlung können verringert werden, so dass weniger Kühlluft erforderlich ist.

Vorteile bei der Herstellung:
- Der Schaft (innen liegender Lastträger 6) kann aus einem einstückigen Schmiedeteil hergestellt werden. Vorgänge: Drehen des zylindrischen Schafts (innen liegender Lastträger 6) (wenn zylindrisch), Anschneiden des Tannenbaumfußes, Fräsen der Flächen auf dem zylindrischen Schaft (innen liegender Lastträger 6) für Innen- und Außenplattform-Befestigungspunkte.

Alternativ kann der Schaft (innen liegender Lastträger 6) als getrenntes Teil aus verdrehten CNT-Strangfasern hergestellt werden.
- Innen- und Außen-Plattformen: Gießen oder Schmieden und dann Bearbeitung durch Fräsen. Die Nut kann durch Funkenerosionsbearbeitung hergestellt werden.
- Tragflächenförmige Büchse (Blattelement 8): kann superelastisch als ein Stück geformt werden oder als ein linkes und ein rechtes Teil in Form gewalzt werden und dann werden die zwei Hälften zusammengeschweißt.
- Keine Sulfidierungsbeschichtung auf den Schaufeln erforderlich.
- Keine Notwendigkeit eines Blattauslaufs zwischen der tragflächenförmigen Büchse (Blattelement 8) und der Innen-und Außen-Plattformen.

### Vorteile bei der Reparatur

Zusätzlich zur erfindungsgemäßen Gestaltung und der erfindungsgemäßen Herstellung ist die Erfindung vorteilhaft im Hinblick auf die Reparatur von beschädigten Schaufeloberflächen.
- Motorturbinenschaufeln von Gasturbinen werden oft an den Eintrittskanten und Austrittskanten der Tragflächen beschädigt, aufgrund der extrem harten und aggressiven Betriebsraumumgebung. Die modulare Konstruktionsweise ermöglicht, dass jedes beschädigte Modul einzeln ersetzt werden kann, so dass eine reparierte Schaufelanordnung "wie neu" erzeugt wird.
- Zum Beispiel kann eine beschädigte Tragflächen-Büchse (Blattelement 8) oder Plattform (3, 10) (innen oder außen) einfach und schnell ausgetauscht werden, ohne das teuere Teil der Schaufel, das in diesem Fall der zentrale Schaft (innen liegender Lastträger) 6 und die Turbinenscheibenfußbefestigung ist, zu wechseln.

### Bezugszeichenliste

- 1: Deckband
- 2: Schaufelblatt
- 3: Plattform/Innen-Plattform
- 4: Schaft
- 5: Fuß
- 6: innen liegender Lastträger
- 7: Hohlraum
- 8: Blattelement
- 9: Nut
- 10: Außen-Plattform
- 11: Nut
- 12: Nut
- 13: Sockel
- 14: Ausnehmung
- 15: Sockel
- 16: Ausnehmung
- 17: Sockel
- 18: Kühlausnehmungen zur Filmkühlung des Blattelements 8
- 19: Kühlkanäle im Fuß 5
- 20: Dämpfungselement
- 21: Gasbelastung
- 22: Momentenarm
- 23: Maschinenachse
- 24: Zentrifugalkraft
- 25: Zentrifugalkraft-Momentenarm
- 26: Zentrifugalkraft-Kräftepaar
- 27: Gaskraft-Kräftepaar
- 28: Kompensationsteil

## Patentansprüche

1. Gasturbinenschaufel mit einem Fuß (5) und einem Schaufelblatt (2), wobei das Schaufelblatt (2) einen innen liegenden Lastträger (6) sowie ein diesen unter Ausbildung eines sich in Schaufellängsachse erstreckenden Hohlraums (7) umgebendes Blattelement (8) umfasst, wobei der Lastträger (6) als zentrales Element ohne Kühlkanäle ausgebildet ist und dass die Kühlluft durch den Fuß (5) in den Hohlraum eingeleitet wird, **dadurch gekennzeichnet, dass** der Lastträger (6) aus Kohlenstofffasern hergestellt ist, wobei der Lastträger (6) aus hohlen Kohlenstofffasern gebildet ist, welche als verdrehte Strangfasern aus Carbon-Nanotubes hergestellt sind.

2. Gasturbinenschaufel nach Anspruch 1, **dadurch gekennzeichnet, dass** die Kühlluft durch eine Plattform (3) des Fußes (5) eingeleitet wird.

3. Gasturbinenschaufel nach einem der Ansprüche 1 oder 2, **dadurch gekennzeichnet, dass** das Blattelement (8) am radial äußeren Endbereich an der Außenplattform (10) gelagert ist.

4. Gasturbinenschaufel nach Anspruch 3, **dadurch gekennzeichnet, dass** das Blattelement (8) im Betrieb auf Druck belastbar ist.

5. Gasturbinenschaufel nach Anspruch 3 oder 4, **dadurch gekennzeichnet, dass** das Blattelement (8) am radial inneren Endbereich verschiebbar an einer Innenplattform (3) gelagert ist.

6. Gasturbinenschaufel nach einem der Ansprüche 1 bis 5, **dadurch gekennzeichnet, dass** das Blattelement (8) mehrteilig ausgebildet ist.

7. Gasturbinenschaufel nach Anspruch 6, **dadurch gekennzeichnet, dass** das Blattelement (8) mittels eines Fügeverfahrens ausbildbar ist.

8. Gasturbinenschaufel nach einem der Ansprüche 1 bis 7, **dadurch gekennzeichnet, dass** das Blattelement (8) aus einem keramischen Werkstoff gefertigt ist.

9. Gasturbinenschaufel nach einem der Ansprüche 1 bis 8, **dadurch gekennzeichnet, dass** der Lastträger (6) mit einem radial äußeren Lagerbock in Form einer Außenplattform (10) verbunden ist.

10. Gasturbinenschaufel nach einem der Ansprüche 1 bis 9, **dadurch gekennzeichnet, dass** der Lastträger (6) an seinem radial innen liegenden Endbereich formschlüssig mit dem Fuß (5) verbunden ist.

## Claims

1. Gas-turbine blade with a root (5) and an airfoil (2), with the airfoil (2) comprising an internal load carrier (6) as well as an airfoil element (8) enclosing the latter by forming a cavity (7) extending along the longitudinal blade axis, wherein the load carrier (6) is designed as a central element without cooling ducts and wherein the cooling air is introduced into the cavity via the root (5), **characterized in that** the load carrier (6) is made of carbon fibres, with the load carrier (6) being constituted of hollow carbon fibres, which are made as twisted string fibres from carbon nanotubes.

2. Gas-turbine blade in accordance with Claim 1, **characterized in that** the cooling air is introduced via a platform (3) of the root (5).

3. Gas-turbine blade in accordance with one of the Claims 1 or 2, **characterized in that** the airfoil element (8) is mounted on the outer platform (10) on its radially outer end section.

4. Gas-turbine blade in accordance with Claim 3, **characterized in that** the airfoil element (8) is subjectable to compressive loads during operation.

5. Gas-turbine blade in accordance with Claim 3 or 4, **characterized in that** the airfoil element (8) is slidingly mounted on an inner platform (3) on its radially inner end section.

6. Gas-turbine blade in accordance with one of the Claims 1 to 5, **characterized in that** the airfoil element (8) is of the multi-part design.

7. Gas-turbine blade in accordance with Claim 6, **characterized in that** the airfoil element (8) can be made in a joining process.

8. Gas-turbine blade in accordance with one of the Claims 1 to 7, **characterized in that** the airfoil element (8) is made of a ceramic material.

9. Gas-turbine blade in accordance with one of the Claims 1 to 8, **characterized in that** the load carrier (6) is connected to a radially outward bearing block in the form of an outer platform (10).

10. Gas-turbine blade in accordance with one of the Claims 1 to 9, **characterized in that** the load carrier (6) on its radially inner end section is positively connected to the root (5).

## Revendications

1. Aube de turbine à gaz avec un pied (5) et une pale (2), sachant que la pale (2) comprend un porte-charge (6) situé à l'intérieur ainsi qu'un élément de pale (8) entourant celui-ci en formant un espace creux (7) s'étendant dans l'axe longitudinal de l'aube, sachant que le porte-charge (6) est conçu sous forme d'élément central sans canaux de refroidissement et que l'air de refroidissement est introduit dans l'espace creux par le pied (5), **caractérisée en ce que** le porte-charge (6) est fabriqué en fibres de carbone, sachant que le porte-charge (6) est constitué de fibres creuses de carbone qui sont fabriquées sous forme de faisceaux de fibres tordus en nanotubes de carbone.

2. Aube de turbine à gaz selon la revendication n° 1, **caractérisée en ce que** l'air de refroidissement est introduit à travers une plate-forme (3) du pied (5).

3. Aube de turbine à gaz selon une des revendications n° 1 ou n° 2, **caractérisée en ce que** l'élément de pale (8) au niveau de son extrémité radialement extérieure, est monté sur la plate-forme extérieure (10).

4. Aube de turbine à gaz selon la revendication n° 3, **caractérisée en ce que** l'élément de pale (8) peut être soumis à une charge de compression en fonctionnement.

5. Aube de turbine à gaz selon la revendication n° 3 ou n° 4, **caractérisée en ce que** l'élément de pale (8) au niveau de son extrémité radialement intérieure, est monté de manière déplaçable sur une plate-forme intérieure (3).

6. Aube de turbine à gaz selon une des revendications n° 1 à n° 5, **caractérisée en ce que** l'élément de pale (8) est conçu en plusieurs pièces.

7. Aube de turbine à gaz selon la revendication n° 6, **caractérisée en ce que** l'élément de pale (8) est réalisable au moyen d'un procédé d'assemblage.

8. Aube de turbine à gaz selon une des revendications n° 1 à n° 7, **caractérisée en ce que** l'élément de pale (8) est fabriqué en un matériau céramique.

9. Aube de turbine à gaz selon une des revendications n° 1 à n° 8, **caractérisée en ce que** le porte-charge (6) est relié à un support de palier radialement extérieur, en forme de plate-forme extérieure (10).

10. Aube de turbine à gaz selon une des revendications n° 1 à n° 9, **caractérisée en ce que** le porte-charge (6), au niveau de son extrémité radialement intérieure, est relié au pied (5) par engagement positif.
